# EUROPEAN PATENT APPLICATION

(11) **EP 3 410 586 A1**
(43) Date of publication of application: **05.12.2018**
(21) Application number: 17744166.4
(22) Date of filing: 24.01.2017
(51) Int. Cl.: H02K 33/16, B06B 1/04

(54) **ACTUATOR**

(30) Priority: 29.01.2016 JP 2016016183
(71) Applicant: Nidec Sankyo Corporation, Suwa-gun, Nagano 393-8511 (JP)
(72) Inventor: TAKEDA, Tadashi, Suwa-gun Nagano 393-8511 (JP); KITAHARA, Hiroshi, Suwa-gun Nagano 393-8511 (JP); TSUCHIHASHI, Masao, Suwa-gun Nagano 393-8511 (JP)
(74) Representative: 2K Patentanwälte Blasberg Kewitz & Reichel
(86) International application number: PCT/JP2017/002260
(87) International publication number: WO 2017/130936

(57) **Abstract**

The present invention provides an actuator wherein a movable body can be made to vibrate in multiple directions. For example, and actuator 1 has a supporting body 5, a movable body 4, and connecting bodies 7 connected to the supporting body 5 and the movable body 4. In first magnetic drive circuits 10 between the supporting body 5 and the movable body 4, first coils 12 and second coils 22 are arranged stacked in two stages in a first direction L1, and first magnets 11 and second magnets 21 are arranged on both sides of the two stages of first coils 12 and second coils 22 in the first direction L1. The first magnetic drive circuits 10 are provided at two separate locations in a second direction L2, and a stopper mechanism 50, which limits the range of movement of the movable body 4 in the directions orthogonal to the first direction L1, is formed between the two first magnetic drive circuits 10 separated in the second direction L2.

## Description

### TECHNICAL FIELD

The present invention relates to an actuator equipped with a magnetic drive mechanism.

### BACKGROUND ART

Proposed as an actuator which allows a user to feel vibrations is a structure with a magnetic driving mechanism which is provided with cylindrical coils and cylindrical magnets around a movable body to vibrate the movable body in the axial direction (Patent literatures 1 and 2).

### CITATION LIST

### PATENT LITERATURE

Patent literature 1: Japanese Patent Laid-Open No. 2002-78310
Patent literature 2: Japanese Patent Laid-Open No. 2006-7161

### SUMMARY TECHNICAL PROBLEM

In the structure disclosed in Patent literatures 1 and 2, however, a movable body vibrates only in the axial direction; therefore, this structure allows a user to feel only one type of vibration. For this reason, when transmitting information to a user through vibrations, only a small amount of information is transmitted to the user.

Taking the above problem into consideration, an objective of the present invention is to provide an actuator capable of vibrating a movable body in multiple directions.

### SOLUTION TO PROBLEM

To solve the above problems, an actuator of the present invention has a supporting body, a movable body, a connecting body which is provided with at least elasticity or viscoelasticity and connected to the movable body and the supporting body, a first magnetic drive circuit which is provided with first magnets held by one of the supporting body and the movable body and first coils held by the other one of the supporting body and the movable body and opposed to the first magnet in the first direction to drive the movable body in the second direction which intersects perpendicularly with the first direction, and a second magnetic drive circuit which is provided with a second magnet held by one of the supporting body and the movable body and a second coil held by the other one of the supporting body and the movable body and opposed to the second magnet in the first direction to drive the movable body in a third direction which intersects perpendicularly with the first direction and intersects with the second direction; in the first magnetic drive circuit, the first coil is stacked in multiple stages in the first direction and the first magnets are arranged on both sides of each of the multiple first coils in the first direction.

In the present invention, the first magnetic drive circuit, which drives the movable body in the second direction with the first coils and the first magnets which are opposed to each other in the first direction, and the second magnetic drive circuit, which drives the movable body in the third direction with the second coils and the second magnets which are opposed to each other in the first direction, are provided; therefore, the movable body can be vibrated in the second direction and in the third direction. Therefore, a user can feel the vibrations in the second direction and in the third direction. Also, the coils and the magnets are opposed to one another in the first direction in both the first magnetic drive circuit and second magnetic drive circuit; therefore, even when the first magnetic drive circuit and the second magnetic drive circuit are provided, the size of the actuator in the first direction can be kept small. For this reason, in the first magnetic drive circuit, the first coil and the first magnets are arranged in multiple stages in the first direction to increase the power of the first magnetic drive circuit. Unlike the structure in which the first coil is made larger to increase the power of the first magnetic drive circuit, the divided the first coils can disperse the heat generated at the first coils. Also, unlike the structure in which the first magnet is made larger to increase the power of the first magnetic drive circuit, the attraction force of the first magnets does not become excessively large; therefore, the first magnets can be handled easily.

In the present invention, the second magnetic drive circuit can adopt a configuration in which multiple second coils are stacked in the first direction and the second magnets are arranged on both sides of each of the multiple second coils in the first direction. With this configuration of the second magnetic drive circuit, the second coils and the second magnets are arranged in multiple stages in the first direction; therefore, the power of the second magnetic drive circuit can be increased. Also, unlike the configuration in which the second coil is made larger to increase the power of the second magnetic drive circuit, the divided second coils can disperse the heart generated at the second coils. Further, unlike the configuration in which the second magnet is made larger to increase the power of the second magnetic drive circuit, the attraction force of the second magnets doesn't become excessively large; therefore, the second magnets can be handled easily.

In the present invention, the supporting body may be equipped with multiple supporting body side holders, which are arranged in stages in the first direction; the movable body is also equipped with multiple movable body side holders, which are arranged in stages in the first direction; the multiple supporting body side holders respectively hold the first magnets or the first coils in its stage in the first direction; and the multiple movable body side holders respectively hold the first magnets or the first coils in its stage in the first direction.

The present invention may adopt a configuration in which the first magnetic drive circuit is provided at two positions which are separated in one of the directions, the second direction or the third direction. With this configuration, the power of the first magnetic drive circuit can be increased. Since the first coils are further dividedly arranged, the heat generated at the first coils can be dispersed. Since the first magnets are dividedly arranged, the attraction force of the first magnets does not become excessively large. Therefore, the first magnet can be handled easily.

The present invention may adopt a configuration in which the second magnetic drive circuit is provided at two positions which are separated in another of the directions the second direction or the third direction. With this configuration, the power of the second magnetic drive circuit can be increased. Also, since the second coils are further dividedly arranged, the heat generated at the second coils can be dispersed. Since the second magnets are also dividedly arranged, the attraction force of the first magnets does not become excessively large. Therefore, the second magnets can easily be handled.

In the present invention, a stopper mechanism may be provided between the first magnetic drive circuits, which are separated in the one direction, to restrict the movable range of the movable body in the direction perpendicular to the first direction. According to this configuration, the stopper mechanism is provided between the first magnetic drive circuits; therefore, the actuator can be kept from becoming large.

In the present invention, the movable body may be provided with a body portion positioned between the first magnetic drive circuits which are separated in the one direction, and the supporting body may be provided with a wall portion which surrounds the outside circumferential surface of the body portion between the first magnetic drive circuits separated in the one direction, configuring the stopper mechanism. According to this configuration, the stopper mechanism can restrict the movable range of the movable body in all the directions perpendicular to the first direction.

In the present invention, the body portion may be configured by coupling parts which couple the movable body side holders positioned next to each other in the first direction, and the wall portion may be the inside circumferential wall of through holes through which the body portion passes in the multiple supporting body side holders.

In the present invention, it is preferred that the body portion and the wall portion be in a circular shape when viewed in the first direction. According to this configuration, the stopper mechanism can set the movable range of the movable body in all the directions perpendicular to the first direction.

Another configuration of the actuator of the present invention is characterized in comprising a supporting body, a movable body, a connecting body which is provided with elasticity or viscoelasticity and connected to the movable body and the supporting body, a first magnetic drive circuit which is provided with first magnets held by one of the supporting body and the movable body and first coils held by the other one of the supporting body and the movable body and opposed to the first magnet in the first direction to drive the movable body in the second direction which intersects perpendicularly with the first direction, and a second magnetic drive circuit provided with second magnets, which is held by one of the supporting body and the movable body, and a second coil, which is held by the other one of the supporting body and the movable body and opposed to the second magnets in the first direction to drive the movable body in a third direction which intersects perpendicularly with the first direction and intersects with the second direction; wherein the first magnetic drive circuit is provided at two positions which are separated in one of the directions, the second direction or the third direction, and a stopper mechanism is arranged between the first magnetic drive circuits separated in the one direction to restrict the movable range of the movable body in the direction perpendicularly intersecting with the first direction.

In another configuration of the actuator of the present invention, the first magnetic drive circuits, which generate the driving force to drive the movable body in the second direction with the first coils and the first magnets opposed to each other in the first direction, and the second magnetic drive circuits, which generate the driving force to drive the movable body in the third direction with the second coils and the second magnets opposed in the first direction, are provided between the movable body and the supporting body. Thus, the movable body can be vibrated in the second direction and the third direction, allowing a user to feel vibrations in the second direction and vibrations in the third direction. Also, the coils and the magnets are opposed to each other in the first direction in both the first magnetic drive circuits and the second magnetic drive circuits; therefore, even with the first magnetic drive circuits and the second magnetic drive circuits provided, the size of the actuator in the first direction can relatively made small. Also, the first magnetic drive circuit is provided at two positions which are separated in the second direction or the third direction; therefore, the power of the first magnetic drive circuits can be increased. Unlike the configuration in which the first coil is made larger to increase the power of the first magnetic drive circuits, the first coils are dividedly arranged, and therefore, the heat generated at the first coils can be dispersed. Also, unlike the configuration in which the first magnets are made larger to increase the power of the first magnetic drive circuits, the attraction force of the first magnet does not become excessively large; therefore, the first magnets can be handled easily. Further, the stopper mechanism is arranged between the first magnetic drive circuits; therefore, even when the stopper mechanism is provided, the actuator can be kept from becoming large.

In another configuration of the actuator of the present invention, the second magnetic drive circuit is provided at two positions which are separated in another of the directions, the second direction or the third direction, and the stopper mechanism is arranged between the first magnetic drive circuits which are separated in the one direction and between the second magnetic drive circuits which are separated in the other direction. According to this configuration, the second magnetic drive circuit is provided at two locations which are separated in the second direction or in the third direction; therefore, the power of the second magnetic drive circuits can be increased. Unlike the configuration in which the second coil is made larger to increase the power of the second magnetic drive circuits, the second coil is divided and therefore the heat generated at the second coil can be dispersed. Also, unlike the configuration in which the second magnet is made larger to increase the power of the second magnetic drive circuits, the attraction force of the second magnets does not become excessively large; therefore, the second magnets can be handled easily.

In another configuration of the actuator of the present invention, the movable body may have a body portion positioned between the first magnetic drive circuits which are separated in one of the directions, the supporting body may have a wall portion which surrounds the outside circumferential surface of the body portion between the first magnetic drive circuits separated in the one direction, configuring the stopper mechanism. According to this configuration, the stopper mechanism can restrict the movable range of the movable body in all the directions which intersect perpendicularly with the first direction.

In another configuration of the actuator of the present invention, it is preferred that the body portion and the wall portion be in a circular shape when viewed in the first direction. According to this configuration, the stopper mechanism can set the movable range of the movable body to be the same in all the directions perpendicularly intersecting with the first direction.

### EFFECTS OF THE INVENTION

In the present invention, the first magnetic drive circuit for driving the movable body in the first direction with the first coil and the first magnets, which are opposed to each other in the first direction, and the second magnetic drive circuit for driving the movable body in the third direction with the second coil and the second magnets, which are opposed to each other in the first direction, are arranged between the movable body and the supporting body. For this reason, the movable body can be vibrated in the second direction and in the third direction; therefore, a user can feel the vibrations in the second direction and the vibrations in the third direction. Also, in either the first magnetic drive circuit or the second magnetic drive circuit, the coil and the magnets are opposed to each other in the first direction; therefore, even with the first magnetic drive circuit and the second magnetic drive circuit provided, the size of the actuator in the first direction can made relatively small.

In the configuration of the present invention, the first coils and the first magnets are arranged in multiple stages in the first direction; therefore, the power of the first magnetic drive circuit can be increased. Unlike the configuration in which the power of the first magnetic drive circuit is increased by making the first coil larger, the first coil is dividedly arranged, and therefore, the heat generated at the first coil can be dispersed. Also, unlike the configuration in which the power of the first magnetic drive circuits is increased by making the first magnet larger, the attraction force of the first magnets does not become excessively large; therefore, the first magnets can be handled easily.

In the other configuration of the present invention, the first magnetic drive circuits is provided at two positions which are separated in one direction; therefore, the power of the first magnetic drive circuit can be increased. Unlike the configuration in which the power of the first magnetic drive circuit is increased by making the first coil larger, the first coil is dividedly arranged, and therefore, the heat generated at the first coil can be dispersed. Also, unlike the configuration in which the power of the first magnetic drive circuits is increased by making the first magnet larger, the attraction force of the first magnets does not become excessively large; therefore, the first magnets can be handled easily. Further, the stopper mechanism is provided between the first magnetic drive circuits, the actuator can be kept from becoming large even with the stopper mechanism provided.

### BRIEF DESCRIPTION OF THE DRAWINGS

Fig. 1 is a perspective view of an actuator to which the present invention is applied.
Fig. 2 is cross-sectional views of the actuator of Fig. 1.
Fig. 3 is an exploded perspective view of the actuator of Fig. 1.
Fig. 4 is an exploded perspective view of a major portion of the actuator of Fig. 1.
Fig. 5 is an exploded perspective view of the major portion of the actuator of Fig. 1 having part of the magnets and the coils removed from the movable body and the supporting body.

### DESCRIPTION OF EMBODIMENTS

Referring to the drawings, an embodiment of the present invention is described. Note that, in the description below, the directions perpendicular to each other are defined as the X-axis direction, the Y-axis direction, and the Z-axis direction, one side of the X-axis direction is given X1, the other side of the X-axis direction is given X2, one side of the Y-axis direction is given Y1, the other side of the Y-axis direction is given Y2, one side of the Z-axis direction is given Z1 and the other side of the Z-axis direction is given Z2, for the purpose of clarifying the layout of the magnetic drive circuit. Of the directions in which the driving force is generated by the magnetic drive circuits, the first direction is L1, the second direction is L2 and the third direction is L3.

### (Overall Configuration)

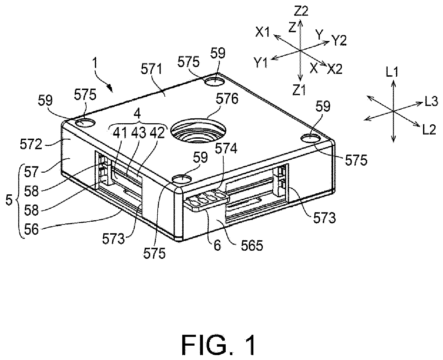

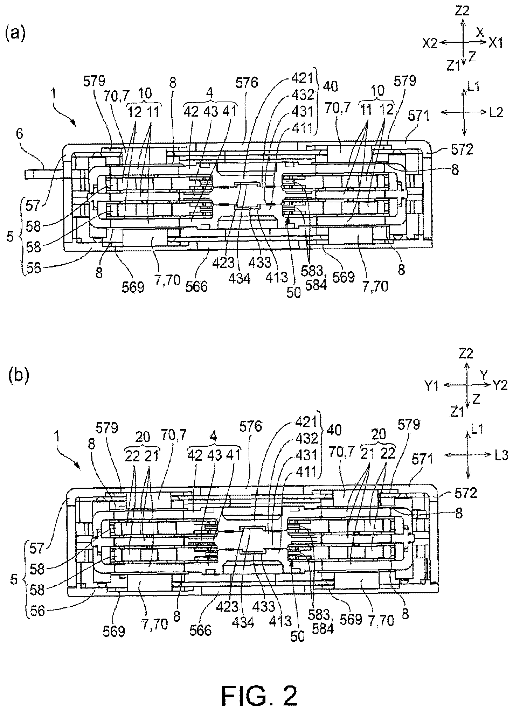

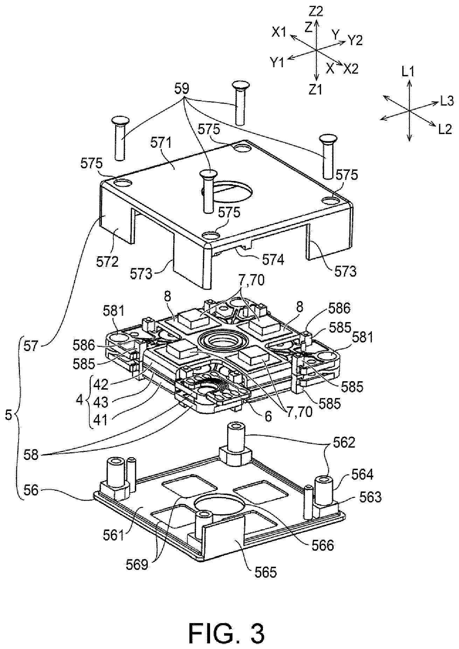

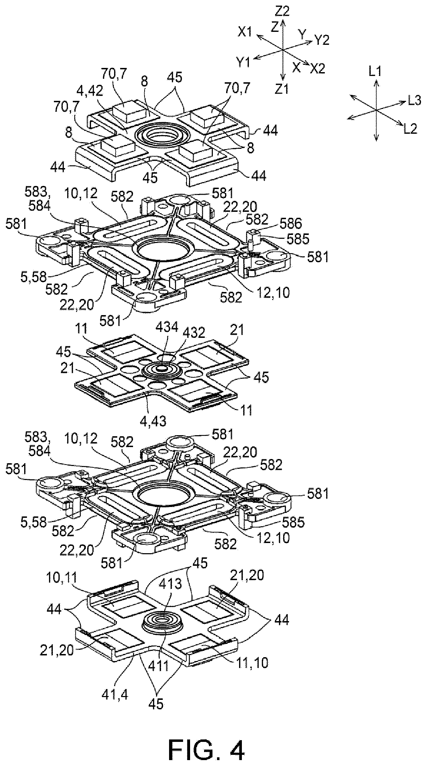

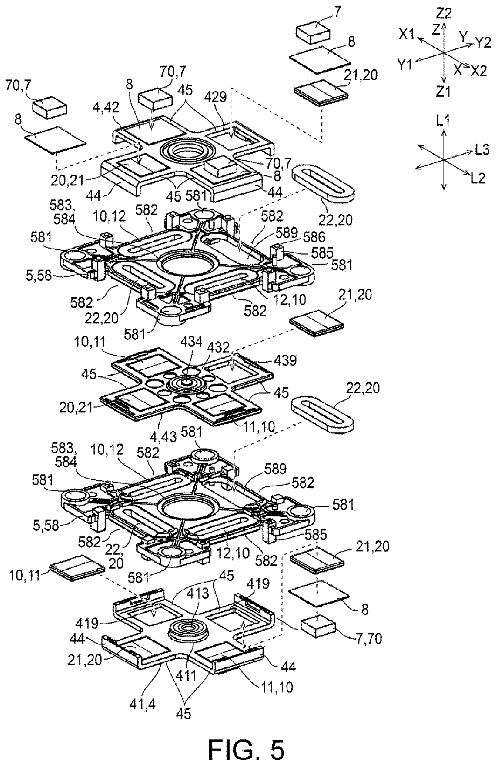

Fig. 1 is a perspective view of an actuator 1 to which the present invention is applied. Fig. 2 is cross-sectional views of the actuator 1 shown in Fig. 1: Fig. 2 (a) and (b) are respectively an XZ cross-section of the actuator 1 along the line passing through the center portion of the actuator 1 and an YZ cross-section along the line passing through the center portion of the actuator 1. Fig. 3 is an exploded perspective view of the actuator 1 of Fig. 1. Fig. 4 is an exploded perspective view of a major portion of the actuator 1 of Fig. 1. Fig. 5 is an exploded perspective view of the major portion of the actuator of Fig. 1, having part of the magnets and the coils removed from the movable body 4 and the supporting body 5.

In Fig. 1, Fig. 2 and Fig. 3, the actuator 1 of this embodiment is an oscillating actuator which allows a user to feel vibrations. The actuator 1 has a supporting body 5, a movable body 4, and a connecting body 7 connected to the movable body 4 and the supporting body 5; the movable body 4 is supported by the supporting body 5 via the connecting body 7. The connecting body 7 has at least elasticity or viscoelasticity, and the movable body 4 is capable of moving relative to the supporting body 5 within the deformation allowable range of the connecting body 4. The actuator 1 also has a first magnetic drive circuit 10 and a second magnetic drive circuit 20 which cause the movable body 4 relative movements with respect to the supporting body 5.

The first magnetic drive circuit 10 has first coils 12 held to the supporting body 5 and first magnets 11 held to the movable body 4; the first magnets 11 and the first coils 12 are opposed to each other in the first direction L1 (the Z-axis direction). The second magnetic drive circuit 20 has second coils 22 held to the supporting body 5 and second magnets 21 held to the movable body 4; the second magnets 21 and the second coils 22 are opposed to each other in the first direction L1 (the X-axis direction). The second direction L2 in which the first magnetic drive circuit 10 generates the driving force is the X-axis direction; the third direction L3 in which the second magnetic drive circuit 20 generates the driving force is the Y-axis direction. Here, the first magnets 11 and the first coils 12 are arranged at two positions which are separated in the second direction L2. In other words, the first magnetic drive circuit 10 is provided at two positions which are separated in the second direction L2. Also, the second magnets 21 and the second coils 22 are arranged at two positions which are separated in the third direction L3. In other words, the second magnetic drive circuit 20 is provided at two positions which are separated in the third direction L3.

### (Configuration of Supporting Body 5)

The supporting body 5 has a first case 56 positioned on one side Z1 of the Z-axis direction, a second case 57 which covers the first case 56 from the other side Z2 of the Z-axis direction, and holders 58 (supporting body side holders) arranged between the first case 56 and the second case 57; the first case 56 and the second case 57 are screwed together by four captive screws 59, interposing the holders 58 between them.

The second case 57 is configured by an end piece 571 having a plane of a quadrangle shape when viewed in the Z-axis direction and four side pieces 572 which protrude from the edges of the end piece 572 toward the first case 56. In the end piece 571, a circular hole 576 is formed in the center and fixing holes 575 are formed at four corners. Notch portions 573 are formed in the centers of the four side pieces 572, each of which is cut from one side Z1 of the Z-axis direction to the other side Z2. In the side piece 572 positioned on the other side X2 of the X-axis direction, a notch portion 574 is formed by cutting the portion next to the notch portion 573 by only the mount of the height in the Z-axis direction.

The first case 56 has an end piece 561 having a plane of a quadrangle shape when viewed in the Z-axis direction and boss portions 562 which protrude from the four corners of the end piece 561 toward the end piece 571 of the second case 57. In the center of the end piece 561, a circular hole 566 is formed. Each of the boss portions 562 is provided with a step surface 563 formed at a position in the Z-axis direction and a cylindrical portion 564 protruding from the step surface 56 toward the other side Z2 of the Z-axis direction. Therefore, as captive screws 59 are screwed into the boss portions 562 of the first case 56 through the fixing holes 575 of the second case 57 from the other side Z2 in the Z-axis direction, the end piece 571 of the first case 56 can be secured to the end portions of the side piece 572 positioned on one side Z1 in the Z-axis direction. The first case 56 is provided with a standing piece 565 which is to be opposed to the notch portion 574 in the first direction L1, and the standing piece 565 creates a slit with the notch portion 574 for positioning a substrate 6 therein. To the substrate 6, feeder wires to the first coil 12 and the second coil 22 are connected.

As shown in Fig. 2, Fig. 4 and Fig. 5, two sheets of holders 58 are stacked in stages in the first direction L1 between the first case 56 and the second case 57. The basic configurations of the two sheets of holders 58 are shared with each other, having holes 583 formed in the center thereof. In this embodiment, the hole 583 is circular. Circular holes 581 are formed at four corners of each holder 58; the cylindrical portions 564 of the boss portions 562 are inserted into the circular holes 581 and the holders 58 are held and positioned at the step surfaces 563. A recess portion 582 which is indented toward the inner circumference is formed in each center of the four sides of the holder 58.

Here, the two sheets of holders 58 are configured by inverting the sheet-like members having the same configuration in the first direction L1. Therefore, column-like protrusions 585 protrude from one of the two holders 58, which is arranged on one side Z1 of the Z-axis direction, toward the first case 56, and multiple column-like protrusions 585 protrude from the other holder 58 arranged on the other side Z2 of the Z-axis direction toward the second case 57. Also, each of the multiple column-like protrusions 585 has a ball-like contact portion 586 at its tip end. Therefore, when the first case 56 and the second case 57 are screwed together by the captive screws 59 having the holders 58 between them, the first case 56, the two holders 58 and the second case 57 are positioned in the first direction L1 with certainty.

### (Arrangement of First Coil 12 and Second Coil 22)

At each of the four spaces created between the recess portions 582 and the holes 583, an elongated through-hole 589 is formed. In each of the two sheets of holders 58, the first coils 12 of the first magnetic drive circuits 10 are held inside the two of the four through-holes 589, which are separated in the second direction L2. Also, in each of the two sheets of the holders 58, the second coils 22 of the second magnetic drive circuits 20 are held inside the two of the four through-holes 589, which are separated in the third direction L3. Thus, each of the two supporting body side holders 58 respectively holds the first coils 12 and the second coils 22 in its stage in the first direction L1; the first coils 12 and the second coils 22 are arranged in two stages in the first direction L1 in the supporting body 5.

The first coil 12 is a flat air core coil having the longitudinal side as the effective side in the third direction L3, and the second coil 22 is a flat air core coil having the longitudinal side as the effective side in the second direction L2.

### (Configuration of Movable Body 4)

The movable body 4 has a sheet-like first holder 41 (a movable body side holder) positioned on one side Z1 of the Z-axis direction with respect to the two sheets of the holders 58, a sheet-like second holder 42 (a movable body side holder) positioned on the other side Z2 of the Z-axis direction with respect to the two sheets of the holders 58, and a sheet-like third holder 43 (a movable body side holder) positioned between the two sheets of the holders 58. The first holder 41, the second holder 42, and the third holder 43 are respectively provided with four protrusions 45 protruding to both sides in the second direction L2 and in the third direction L3, creating a + (plus) shape when viewed in the Z-axis direction. The end portions of the protrusions 45 formed to the first holder 41 are bent toward the other side Z2 of the Z-axis direction, making joining portions 44; the end portions of the protrusions 45 formed to the second holder 42 are bent toward one side Z1 of the Z-axis direction, making joining portions 44. Therefore, when the first holder 41, the second holder 42 and the third holder 43 are stacked together, the end portions of the protrusions 45 of the first holder 41, the second holder 42 and the third holder 43 make contact with each other. For this reason, by joining the end portions of the protrusions 45 of the first holder 41, the second holder 42 and the third holder 43 together by a method using adhesive or soldering, the first holder 41, the second holder 42 and the third holder are coupled together.

### (Arrangement of First Magnet 11 and Second Magnet 21)

The first holder 41, the second holder 42 and the third holder 43 respectively have quadrangle through-holes 419, 429, 439 in the four protrusion portions 45 which protrude to both sides of the second direction L2 and of the third direction L3. The first magnets 11 of the first magnetic drive circuit 10 are held in the through holes 419, 429, 439 of the two of the four protrusion portions 45, which are separated in the second direction L2. In the same manner, the second magnets 21 of the second magnetic drive circuit 20 are held in the through-holes 419, 429, 439 of the other two protrusion portions 45, which are separated in the third direction L3. Therefore, the first holder 41, the second holder 42 and the third holder 43 respectively hold the first magnets 11 and the second magnets 21 in each stage in the first direction L1.

As described above, in the first magnetic drive circuit 10, multiple first coils 12 are stacked in multiple stages in the first direction L1 and the first magnets 11 are arranged on both sides of each of the multiple first coils 12 in the first direction L1. Also, in the second magnetic drive circuit 20, multiple second coils 22 are stacked in multiple stages in the first direction L1 and the second magnets 21 are arranged on both sides of each of the multiple second coils 22. In this embodiment, the first coils 12 and the second coils 22 are stacked in two stages in the first direction L1, and the first magnets 11 and the second magnets 21 are arranged on both ends in the first direction L1 of each of the first coils 12 and the second coils 22 in two stages. The first magnet 11 is made of a magnet sheet having the magnetic polarization direction in the second direction L2.

Here, back yokes 8 arranged on one side Z1 of the Z-axis direction are layered on the first magnets 11 and the second magnets 21 held in the first holder 41. Also, back yokes 8 arranged on the other side Z2 of the Z-axis direction are layered on the first magnets 11 and the second magnets 21 held in the second holder 42. The back yoke 8 is larger than the first magnet 11 or the second magnet 21 (the size of the through hole 419, 429) and is secured to the first holder 41 or the second holder 42 by a method of adhesive, etc.

### (Connecting Body 7)

Between the back yokes 8 provided to the first holder 41 and the end piece 561 of the first case 56, connecting bodies 7 contacting with the back yokes 8 and the first case 56 are provided at four places. Also, between the back yokes 8 provided to the second holder 42 and the end piece 571 of the second case 57, connecting bodies 7 contacting with the back yokes 8 and the second case 57 are provided to four places.

In this embodiment, the connecting bodies 7 are composed of gel damper members 70 and are arranged between the movable body 4 and the supporting body 5. In this embodiment, the gel damper member 70 is formed of a sheet silicone gel. The plan shape of the gel damper member 70 is polygon such as quadrangle; the portions of the end piece 561 of the first case and the portions of the end piece 571 of the second case 57, in which the gel damper members 70 are arranged, are made as recess portions 569, 579 (refer to Fig. 2).

The gel damper member 70 has viscoelasticity and also has linear or non-linear stretching characteristics, depending on the stretching direction. For example, when pressed in the thickness direction (the axial direction) and compressively deformed, the sheet-like gel damper members 70 demonstrate the stretching characteristics in which the non-linear component is greater than the linear component. On the other hand, when stretched by being pulled in the thickness direction (the axial direction), the damper members 70 demonstrate the stretching characteristics in which the linear component is greater than the non-linear component. Even when deformed in the direction (the shear direction) which intersects with the thickness direction (the axial direction), the damper members 70 demonstrate the deformation characteristics in which the linear component is greater than the non-linear component. In this embodiment, the gel damper member 70 is composed of silicone gel shaped in a cylindrical form, and has a penetration from 90° to 110°. In this embodiment, the gel damper member 70 is composed of silicone gel shaped in a quadratic prism. As defined in JIS-K-2207 or JIS-K-2220, the penetration is measured as the penetration depth of a 1/4 scale cone needle, which weighs 9.38g, penetrating per 5 seconds at 25°C is expressed in 1/10 millimeters: the smaller the value is, the harder the silicone is.

### (Configuration of Stopper Mechanism 50)

As shown in Fig. 2, etc., in the center of the first holder 41, a raised coupling part 411 having an outside diameter smaller than the hole 583 of the holder 58 protrudes toward the other side Z2 of the Z-axis direction; in the center of second holder 42, a raised coupling part 421 having the outside diameter smaller than the hole 583 of the holder 58 protrudes toward one side Z1 of the Z-axis direction. In the center of the third holder 43, a raised coupling part 431 having the outside diameter smaller than the hole 583 of the hole 58 protrudes toward one side Z1 of the Z-axis direction and a raised coupling part 432 having the outside diameter smaller than the hole 583 of the holder 58 protrudes toward the other side Z2 of the Z-axis direction. The raised coupling part 431 of the third holder 43 abuts on the raised coupling part 411 of the first holder 41 inside the hole 583 of the holder 58. The raised coupling part 432 of the third holder 43 abuts on the raised coupling part 421 of the second holder 42 inside the hole 583 of the holder 58. The tip end portions of the raised coupling parts 431, 432 of the third holder 43 respectively have a raised positioning portion 433, 434 formed thereon while the tip end potions of the raised coupling parts 411, 412 of the first holder 41 and the second holder 42 respectively have a recess portion 413, 423 in which the raised positioning portion 433, 434 is fit. The raised coupling part 431 of the third holder 3 is joined with the raised coupling part 411 of the first holder 41 by adhesive, etc.; the raised coupling part 432 of the third holder 43 is joined with the raised coupling part 421 of the second holder 42 by adhesive, etc. Therefore, the first holder 41, the second holder 42 and the third holder 43 are connected to each other by the body portion 40 which consists of the raised coupling parts 411, 431 and 421.

Consequently, a wall portion 584 inside the hole 583 of the holder 58, formed in the supporting body 5, surrounds the circumference of the body portion 40 formed in the movable body 4, configuring a stopper mechanism 50 to restrict the movable range of the movable body 4 in the direction perpendicular to the first direction L1.

### (Operation and Major Effect)

In the actuator 1 of this embodiment, as an alternate current is applied to the first coils 12 of the first magnetic drive circuits 10, the movable body 4 is vibrated in the second direction L2 which is perpendicular to the first direction L1. As an alternate current is applied to the second coils 22 of the second magnetic drive circuits 20, the movable body 4 is vibrated in the third direction L3 which intersects perpendicularly with the first direction L1 and which intersects with the second direction L2. At that time, the center of gravity in the actuator 1 deviates in the second direction L2 and the third direction L3; therefore, a user can feel vibrations in the second direction L2 and the vibrations in the third direction L3. Also, if the waveform of the alternate current applied to the first coils 12 is adjusted to differentiate the speed of the movable body 4 which moves to one side of the second direction L2 from the speed of the movable body 4 which moves to the other side of the second direction L2, a user can feel the vibrations having the directionality in the second direction L2. In the same manner, if the waveform of the alternate current applied to the second coils 22 is adjusted to differentiate the speed of the movable body 4 which moves to one side in the third direction L3 from the speed of the movable body 4 which moves to the other side in the third direction L3, a user can feel the vibrations having the directionality in the third direction L3.

In the first magnetic drive circuits 10 and the second magnetic drive circuits 20 respectively, the first coils 12 and the first magnets 11 are opposed to each other in the first direction L1 and the second coils 22 and the second coils 22 are opposed to each other in the first direction. Therefore, even with both the first magnetic drive circuits 10 and the second magnetic drive circuits 20 provided, the size of the actuator 1 in the first direction L1 can be kept relatively small. Therefore, in the first magnetic drive circuits 10 and the second magnetic drive circuits 20 respectively, the first coils 12 and the second coils 22 are stacked in two stages in the first direction L1 and the first magnets 11 and the second magnets 21 are arranged on both sides in the first direction L1 of each of the first coils 12 and the second coils 22 in two stages to increase the power of the first magnetic drive circuits 10 and the second magnetic drive circuits 20; even in this case, the size of the actuator 1 in the first direction L1 can be kept relatively small. Since the first magnets 11 and the second magnets 21 are arranged on both sides in the first direction L1 of each of the first coils 12 and the second coils 22 arranged in two stages, there is less magnetic flux leakage, unlike the configuration in which the magnet is opposed to each other on only one side of the coil. Therefore, the thrust to move the movable body 4 can be increased.

When the number of the coils are increased by arranging the first coils 12 and the second coils 22 in multiple stages, the heat generated at the first coils 12 and the second coils 22 can be dispersed, unlike the configuration in which one coil is made larger. Also, when the number of the first magnets 11 and the second magnets 21 is increased by arranging them in multiple stages, the size of the first magnet 11 and the second magnet 21 is still small, thus keeping the attraction force of the first magnets 11 and the second magnets 21 from being excessively large, unlike the configuration in which one magnet is made larger. Therefore, the first magnets 11 and the second magnets 21 can be handled easily.

In this embodiment, the first magnetic drive circuit 10 is provided at two positions which are separated in the second direction L2 and the second magnetic drive circuit 20 is provided at two positions which are separated in the third direction L3; therefore, the power of the first magnetic drive circuit 10 and the second magnetic drive circuit 20 can be increased. Also, the first coils 12 and the second coils 22 are dividedly arranged, the heat generated at the first coils 12 and the second coils 22 can be dispersed. The first magnets 11 and the second magnets 21 are also dividedly arranged; therefore, the attraction force of the first magnets 11 and the second magnets 21 is kept from being excessively large. Therefore, the first magnets 11 and the second magnets 21 can easily be handled.

Here, the first magnet drive circuit 10 is arranged at two positions which are separated in the second direction L2 and overlap when viewed from the second direction L2. Also, the second magnetic drive circuit 20 is arranged at two positions which are separated in the third direction L3 and overlap when viewed from the third direction L3. For this reason, when the first magnetic drive circuits 10 and the second magnetic drive circuits 20 are driven to vibrate the movable body 4 in the second direction L2 and in the third direction L3, the movable body 4 does not easily rotate around the axis extending in the first direction L1; therefore, the movable body 4 can efficiently be vibrated. Particularly in this embodiment, the first magnetic drive circuits 10 at two positions are arranged to be in point symmetry which is turned around the center of gravity of the movable body 4; the second magnetic drive circuits 20 at two positions are also arranged to be in point symmetry which is turned about the center of gravity of the movable body 4. When viewed in the first direction L1, the first magnetic drive circuits 10 at two positions are to be in line symmetry reflected upon an imaginary line passing through the center of gravity of the movable body 4 and extending in the third direction L3, and the second magnetic drive circuits 20 at two positions are to be in line symmetry reflected upon an imaginary line passing through the center of gravity of the movable body 4 and extending in the second direction L2. For this reason, when the first magnetic drive circuits 10 and the second magnetic drive circuits 20 are driven to vibrate the movable body 4 in the second direction L2 and in the third direction L3, the movable body 4 is even less likely to rotate around the axis which runs in the first direction L1; therefore, the movable body 4 can be vibrated even more efficiently.

Also, the supporting body 5 is equipped with two holders 58 (the supporting body side holders) which are stacked in the first direction L1, and the movable body 4 is provided with multiple holders (the first holder 41, the second holder 42 and the third holder 43) which are also stacked in the first direction L1; each of the holders 58, the first holder 41, the second holder 42 or the third holder 43 holds a magnet or a coil in its stage. Therefore, unlike the configuration in which one holder holds the magnets or coils in multiple stages, the configuration of the supporting body 5 and the movable body 4 can be simplified and the mounting of the magnet or the coil can efficiently be done. Also, the number of stages in which the magnet or the coil is arranged can easily be increased.

In this embodiment, the space between the first magnetic drive circuits 10 which are separated in the second direction L2 and between the second magnetic drive circuits 20 which are separated in the third direction L3 is utilized to provide the stopper mechanism 50 to restrict the movable range of the movable body 4 in the direction orthogonal to the first direction L1. Therefore, when the movable body 4 is vibrated in the second direction L2 and in the third direction L3, the connecting body 7 (the gel damper member 70) deforms in the shear direction; however, the movable range of the movable body 4 can be set less than the ultimate deformation amount of the gel damper member 70 in the shear direction. Therefore, even if the movable body 4 makes maximum vibrations, the gel damper members 70 do not stretch more than the ultimate deformation amount; therefore, a damage to the gel damper members 70 can be avoided. Also, since the space between the first magnetic drive circuits 10 which are separated in the second direction L2 and between the second magnetic drive circuits 20 which are separated in the third direction L3 is utilized to provide the stopper mechanism 50, the size of the actuator 1 can be kept from becoming large even with the stopper mechanism 50 provided.

The movable body 4 is provided with the body portion 40 positioned between the first magnetic drive circuits 10, which are separated in the second direction L2, and between the second magnetic drive circuits 20, which are separated in the third direction L3; the supporting body 5 has a wall portion 584 (the inside wall of the hole 583 of the holder 58) which surrounds the outside circumferential surface of the body portion 40, configuring the stopper mechanism 50. Therefore, the stopper mechanism 50 can restrict the movable range of the movable body 4 in all the directions perpendicular to the first direction L1. Furthermore, the body portion 40 and the wall portion 584 are in a circular shape when viewed in the first direction L1; therefore, the stopper mechanism 50 can set the movable range of the movable body 4 equal in all the directions perpendicular to the first direction L1.

The body portion 40 is formed of the raised coupling parts 411, 421, 431, 432 which connect the movable body side holders (the first holder 41, the second holder 42, the third holder 43), which are next to each other in the first direction. Therefore, the stopper mechanism 50 can be configured by using the raised coupling parts 411, 421, 431, 432 which connect the first holder 41, the second holder 42 and the third holder 43 together. Also, in the movable body 4, the first holder 41, the second holder 42 and the third holder 43 are joined together by bonding the raised coupling parts 411, 421, 431, 432 as well as bonding the joining portions 44. Thus, the strength of the movable body 4 can be increased.

In the actuator 1, when the connecting body 7 for connecting the movable body 4 and the supporting body 5 is composed of a spring member, the movable body 4 sometimes resonates at the frequency corresponding to the mass of the movable body 4 and the spring constant of the spring member; however, in this embodiment, the gel damper member 70 is used for the connecting body 7. In this embodiment, also, only the gel damper member 70 is used for the connecting body 7; the gel-damper member 70 has no spring components or has a deformation property which has no spring components or has fewer spring components depending on its deformation direction. For this reason, the resonance of the movable body 4 can be prevented. Also, the gel damper members 70 are secured to both the movable body 4 and the supporting body 5 by a method of adhesive, etc. Therefore, the gel damper members 70 are kept from moving together with the movement of the movable body 4. Since only the gel damper member 70 can be used for the connecting body 7, the configuration of the actuator 1 can be simplified. Also, the gel damper member 70 has a penetration from 90° to 100°. Therefore, the gel damper member 70 has elasticity sufficient enough to demonstrate damper function, and will rarely be broken and scattered.

The gel damper member 70 is arranged at both sides of the movable body 4 in the first direction L1 between the supporting body 5 and the movable body 4. Therefore, when the movable body 4 vibrates in the first direction L1, the gel damper member 70 is compressively deformed on either one or the other side in the first direction L1 and is stretched in its thickness direction (the axial direction) on the opposite side. As described above, the gel damper member 70 has the stretching property in which the nonlinear component is more than the linear component at the time of compression; therefore, when the movable body 4 moves in the first direction L1, the gel damper member 70 on the compression side is always compressed according to the non-linear stretching property. Therefore, significant changes in the gap between the movable body 4 and the supporting body 5 are avoided, and thus, the gap between the movable body 4 and the supporting body 5 in the first direction can be maintained.

Also, when the movable body 4 moves in the second direction L2 and in the third direction L3, the gel damper member 70 deforms in the direction (the shear direction) perpendicularly intersecting with the thickness direction (the axial direction). In other words, the shear direction of the gel damper member 70 is, when the gel damper member 70 connecting the supporting body 5 and the movable body 4 which are opposed to each other in the first direction L1 stretches, the direction perpendicularly intersecting with its stretching direction, which is the direction parallel to the vibration direction of the movable body 4. Therefore, for vibrating the movable body 4 in the second direction L2 and the third direction L3, the actuator 1 uses the deformation property of the gel damper member 70 in the shear direction. The deformation property of the gel damper member 70 in the shear direction has more linear components than the non-linear components. Therefore, the vibration property having good linearity can be obtained in the drive direction (the second direction L2, the third direction L3) of the actuator 1.

### [Other Embodiments]

In the above-described embodiment, the magnets are arranged in the movable body 4 and the coils are arranged in the supporting body 5; however, the coils may be arranged in the movable body 4 and the magnets may be arranged in the supporting body 5. In this case, the movable body side holders hold the coils and the supporting body side holders hold the magnets. In the above-described embodiment, two first magnetic drive circuits 10 are separated in the second direction L2 and two second magnetic drive circuits 20 are separated in the third direction L3; however, two first magnetic drive circuits 10 may be separated in the third direction L3 and two second magnetic drive circuits 20 may be separated in the second direction L2.

In the above embodiment, only the gel damper member 70 is used for the connecting body 7; however, a form using a spring or a form using both a spring and the gel damper member 70 may be used for the connecting body 7.

### REFERENCE SIGNS LIST

- 1: Actuator
- 4: Movable body
- 5: Supporting body
- 7: Connecting body
- 8: Back yoke
- 10: First magnetic drive circuit
- 11: First magnet
- 12: First coil
- 20: Second magnetic drive circuit
- 21: Second magnet
- 22: Second coil
- 40: Body portion
- 41: First holder (Movable body side holder)
- 42: Second holder (Movable body side holder)
- 43: Third holder (Movable body side holder)
- 45: Protrusion
- 50: Stopper mechanism
- 56: First case
- 57: Second case
- 58: Holder (Supporting body side holder)
- 70: Gel damper member
- 411, 421, 431, 432: Raised coupling part (Coupling portion)
- 419, 429, 439: Through-hole
- 583: Hole
- 584: Wall portion
- L1: First direction
- L2: Second direction
- L3: Third direction

## Claims

1. An actuator is **characterized in that**, comprising:
a supporting body;
a movable body;
a connecting body having at least elasticity or viscoelasticity, which is connected to the supporting body and the movable body;
a first magnetic drive circuit having first magnets held by one of the supporting body and the movable body and first coils held by the other one of the supporting body and the movable body and opposed to the first magnets in a first direction, wherein the first magnetic drive circuit is used to drive the movable body in a second direction perpendicular to the first direction; and
a second magnetic drive circuit having a second magnet held by one of the supporting body and the movable body and a second coil held by the other one of the supporting body and the movable body and opposed to the second magnet in the first direction, wherein the second magnetic drive circuit is used to drive the movable body in a third direction which is perpendicular to the first direction and intersects with the second direction,
wherein in the first magnetic drive circuit, a plurality of the first coils are stacked in multiple stages in the first direction, and the first magnets are arranged on both sides of each of the plurality of the first coils in the first direction.

2. The actuator as set forth in Claim 1 is **characterized in that**, wherein in the second magnetic drive circuit, a plurality of the second coils are stacked in multiple stages in the first direction and the second magnets are arranged on both sides of each of the plurality of the second coils in the first direction.

3. The actuator as set forth in Claim 1 or Claim 2 is **characterized in that**, wherein
the supporting body is provided with multiple supporting body side holders stacked in the first direction,
the movable body is provided with multiple movable body side holders stacked in the first direction,
each of the multiple supporting body side holders holds the first magnet or the first coil in one stage in the first direction, and
each of the multiple movable body side holders holds the first magnet or the first coil in one stage in the first direction.

4. The actuator as set forth in Claim 3 is **characterized in that**, wherein
each of the multiple supporting body side holders holds the first coil in one stage in the first direction, and
each of the multiple movable body side holders holds the first magnet in one stage in the first direction.

5. The actuator as set forth in one of Claims 1 through 4 is **characterized in that**, wherein
the first magnetic drive circuit is provided at two positions which are separated in one direction of the second direction and the third direction.

6. The actuator as set forth in Claim 5 is **characterized in that**, wherein
the second magnetic drive circuit is provided at two positions which are separated in the other direction of the second direction and the third direction.

7. The actuator as set forth in Claim 5 or Claim 6 is **characterized in that**, wherein a stopper mechanism is provided between the first magnetic drive circuits separated in the one direction to restrict the movable range of the movable body in a direction perpendicular to the first direction.

8. The actuator as set forth in Claim 7 is **characterized in that**, wherein
the movable body has a body portion positioned between the first magnetic drive circuits which are separated in the one direction, and
the supporting body has a wall portion which surrounds an outside circumferential surface of the body portion between the first magnetic drive circuits, which are separated in the one direction, configuring the stopper mechanism.

9. The actuator as set forth in Claim 8 is **characterized in that**, wherein
the body portion is configured by coupling parts which couples said the movable body side holders, next to each other in the first direction, together, and
the wall portion is an inside circumferential wall of a through-hole through which the body portion passes in the multiple supporting body side holders.

10. The actuator as set forth in Claim 8 or Claim 9 is **characterized in that**, wherein
when viewed in the first direction, the body portion and the wall portion are in circular shapes.

11. An actuator is **characterized in that**, comprising:
a supporting body;
a movable body;
a connecting body having at least elasticity or viscoelasticity, which is connected to the supporting body and the movable body;
a first magnetic drive circuit having first magnets held by one of the supporting body and the movable body and first coils held by the other one of the supporting body and the movable body and opposed to the first magnets in a first direction, wherein the first magnetic drive circuit is used to drive the movable body in a second direction perpendicular to the first direction; and
a second magnetic drive circuit having a second magnet held by one of the supporting body and the movable body and a second coil held by the other one of the supporting body and the movable body and opposed to the second magnet in the first direction, wherein the second magnetic drive circuit is used to drive the movable body in a third direction which is perpendicular to the first direction and intersects with the second direction,
wherein the first magnetic drive circuit is provided at two positions which are separated in one direction of the second direction and the third direction, and
a stopper mechanism is provided between the first magnetic drive circuits which are separated in the one direction to restrict the movable range of the movable body in a direction perpendicular to the first direction.

12. The actuator as set forth in Claim 11 is **characterized in that**, wherein
the second magnetic drive circuit is arranged at two positions which are separated in the other direction of the second direction and the third direction, and
the stopper mechanism is provided between the first magnetic drive circuits separated in the one direction and between the second magnetic drive circuits separated in the other direction.

13. The actuator as set forth in Claim 12 is **characterized in that**, wherein
the movable body has a body portion positioned between the first magnetic drive circuits which are separated in the one direction, and
the supporting body has a wall portion which surrounds an outside circumferential surface of the body portion between the first magnetic drive circuits which are separated in the one direction, configuring the stopper mechanism.

14. The actuator as set forth in Claim 13 is **characterized in that**, wherein
when viewed in the first direction, the body portion and the wall portion are in circular shapes.
